# EUROPEAN PATENT APPLICATION

(11) **EP 3 219 977 A1**
(43) Date of publication of application: **20.09.2017**
(21) Application number: 17161395.3
(22) Date of filing: 16.03.2017
(51) Int. Cl.: F03B 13/10, F03B 13/26

(54) **SYSTEM FOR GENERATING ELECTRIC-POWER THROUGH THE EXPLOITATION OF UNDERWATER CURRENTS**

(30) Priority: 16.03.2016 IT UA20161740
(71) Applicant: D&M Holding S.p.A., 36100 Vicenza (IT)
(72) Inventor: BERTOTTO, Ezio, 36050 Bolzano Vicentino (Vicenza) (IT)
(74) Representative: Feltrinelli, Secondo Andrea

(57) **Abstract**

A system for producing electric energy at least through the exploitation of underwater currents comprises a floating platform (2), at least one hydraulic turbine (3), adapted to produce electrical current when hit by an underwater current, members (6) for connecting the at least one hydraulic turbine (3) to the floating platform (2), wherein the connection members (6) maintain the at least one hydraulic turbine (3) below the floating platform (2), and members (7) for moving the at least one turbine (3) with respect to the floating platform (2), such members (7) configured to allow the approach/movement away of the at least one hydraulic turbine (3) with respect to the floating platform (2).

## Description

### TECHNICAL FIELD OF THE INVENTION

The present invention refers to a system for producing electric energy by means of the exploitation of underwater currents.

### STATE OF THE PRIOR ART

Today, through the exploitation of so-called renewable energies, it is possible to produce electric energy starting from clean energy sources normally available in nature, such as solar radiation, air currents, river currents or currents of artificial collection basins.

Even if such systems allow producing electric energy in a clean manner, and in any case with minimal environmental impact, with respect to the pollution caused by the conventional systems that provide for the combustion of fossil fuels such as oil, or solids such as coal, their use is nevertheless hindered by the high costs of equipping, management and maintenance of the relative plants.

Among the various sources of renewable energy available for producing electric energy, underwater currents are today considered a potentially important source of electric energy.

One limit in the exploitation of underwater currents for producing electric energy is determined by the considerable costs for implementing the plants, and even more by the maintenance costs of such plants.

Indeed, generally a plant for producing electric energy by means of the exploitation of underwater currents provides for the installation of one or more hydraulic turbines anchored to the bottom of the sea or ocean, sometimes at high depth. The hydraulic turbines can be anchored directly to the bottom of the sea or in some cases by means of pillars or frame structures, thus allowing the installation of the hydraulic turbines at a different depth with respect to that of the sea bed.

As stated, one drawback of such solution regards the high costs of implementing the plant, and even more so, the high costs for the maintenance thereof. If the hydraulic turbines are installed at ten or hundreds of meters depth, the same are hard to reach, requiring means or personnel that is highly specialized for performing maintenance. It follows that the operating and maintenance costs of a similar plant are high, and in some cases even higher than the earnings of the plant itself.

In order to overcome the difficult of maintenance of such plants, hydraulic turbines with high efficiency have been made, whose maintenance might not be necessary for decades, in order to ensure a prolonged continuity of service, thus reducing the need to perform the aforesaid maintenance operations.

If on one hand the high efficiency allows reducing or even eliminating the need for any maintenance on the hydraulic turbine substantially for the entire lifetime expected for the plant, on the other hand it determines a considerable increase of manufacturing costs for the plant itself, to the point that such costs actually nullify the advantages deriving from the exploitation of the energy available by means of the exploitation of underwater currents.

There is therefore the need in the field to provide a system for producing electric energy by means of the exploitation of underwater currents that is able to overcome the drawbacks of the known solutions, in the scope of a solution with high efficiency and limited management costs.

### OBJECTS OF THE INVENTION

The technical task of the present invention is that of improving the state of the art.

In the scope of such technical task, one object of the present invention is to implement a system for producing electric energy by means of the exploitation of underwater currents, with particular reference to marine currents, in the scope of a solution that has limited management costs with respect to the costs of the solutions of known type.

Another object of the present invention is to make a system for producing electric energy through the exploitation of underwater currents in the scope of a solution requiring easy maintenance.

A further object of the present invention is to provide a system for producing electric energy by means of the exploitation of underwater currents in the scope of a solution with high efficiency.

This task and these objects are all attained by a system for producing electric energy according to the enclosed claim 1.

The dependent claims refer to preferred and advantageous embodiments of the invention.

### BRIEF DESCRIPTION OF THE DRAWINGS

Further characteristics and advantages of the present invention will be clearer from the detailed description of a preferred but not exclusive embodiment of a system for producing electric energy by means of the exploitation of underwater currents, illustrated by way of a non-limiting example in the set of drawings in which:
figure 1 is a schematic perspective view of a system for producing electric energy by means of the exploitation of underwater currents according to the present invention;
figure 2 is a side view of a system for producing electric energy according to the present invention, in a first operative configuration;
figure 3 is a perspective view of a system for producing electric energy according to the present invention in a non-operative configuration.
figure 4 is a perspective view of a further non-operative configuration of a system for producing electric energy according to the present invention; figure 5 is a schematic perspective view of a further version of a system for producing electric energy according to the present invention.

### EMBODIMENTS OF THE INVENTION

With reference to the enclosed figures, a system for producing electric energy by means of the exploitation of underwater currents is indicated overall with reference number 1.

In the following description, reference will be made to the exploitation of marine currents, even if it is intended that the system for producing electric energy according to the present invention can also be used for exploitation of ocean or fluvial currents, without any limitation.

The system for producing electric energy 1 according to the present invention comprises at least one floating platform 2, with which at least one hydraulic turbine 3 is operatively associated.

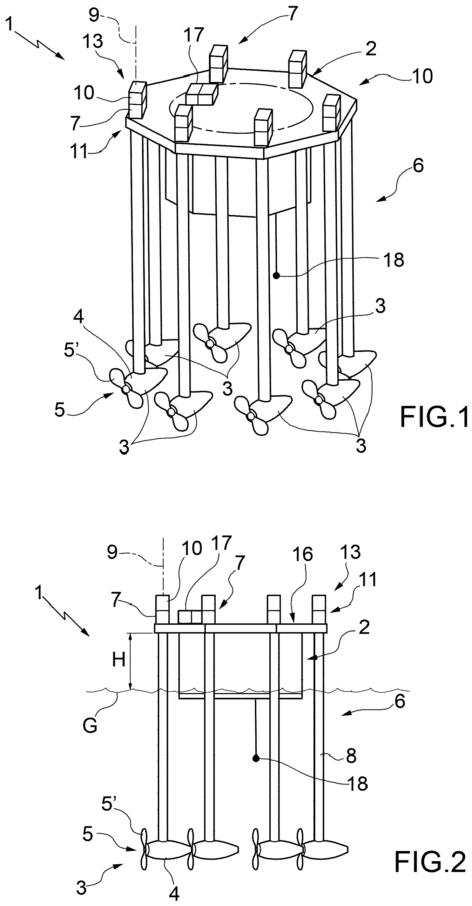

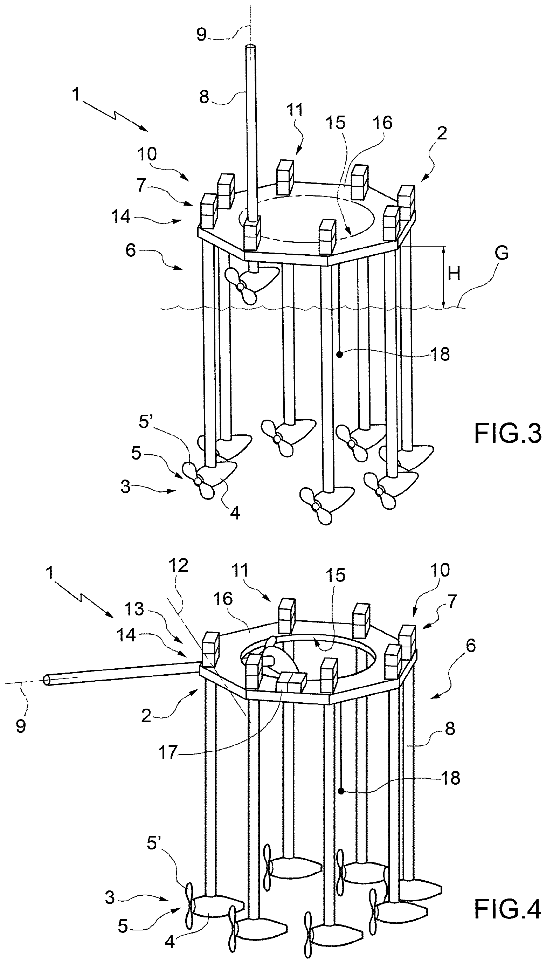

The floating platform 2 can be configured in a manner so as to be extended for a specific height H above the floating surface G, see for example figures 2 and 3.

The floating platform 2 can be constrained to the sea bed by means of suitable anchoring means of the type known in the field, not illustrated in the enclosed figures, which will not be described in detail.

In such a manner, during use, the floating platform 2 is fixed with respect to the marine currents that hit it, for the purpose of allowing a correct actuation of the at least one hydraulic turbine 3.

The at least one hydraulic turbine 3 comprises a body 4, to which a rotary member 5 is connected that is adapted to be rotated around a rotation axis when hit by a fluid.

According to one version of the present invention, with reference to that illustrated in the enclosed figures 1-4, the rotary member 5 can be configured as a propeller 5' provided with at least one blade, adapted to be rotated around a relative substantially horizontal rotation axis.

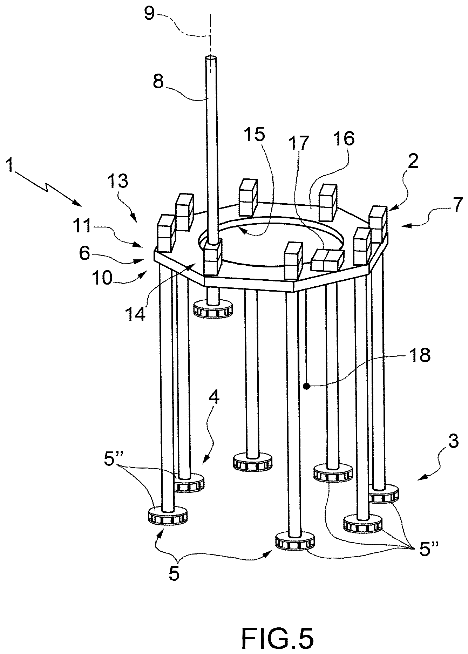

According to a further version of the present invention, with reference to that illustrated in the enclosed figure 5, the rotary member 5 can be configured as a bladed body 5", adapted to be rotated around a relative rotation axis which can be substantially vertically oriented. According to a further version, not illustrated in the enclosed figures, the bladed body 5" can be configured in order to be rotated around a horizontal rotation axis.

If the rotary member 5 is configured as a bladed body 5", rotatable around a vertical rotation axis, mechanical transmission means can be provided, not illustrated in the enclosed figures, comprising at least one drive shaft or the like, in order to transmit the motion of the bladed body 5" far from the at least one hydraulic turbine 3. For example, the mechanical transmission means can be configured for transmitting the rotation motion of the bladed body 5" to a generator placed outside the water at or above the floating platform 2.

It is intended that the at least one hydraulic turbine 3 can be configured in a different manner with respect to that described above, though comprising a fixed body 4 to which a rotary member 5 is associated that is set to produce electric energy following its rotation.

For such purpose, it is observed that the rotary member 5 is in turn operatively connected to an electric generator of the type comprising a stator and a rotor, not illustrated in the enclosed figures, adapted to produce electric energy when the rotor is rotated with respect to the stator, according to modes known in the field, which will not be further described.

According to one version of the present invention, in which the rotary member 5 is configured as a propeller 5', the body 4 can have oblong and tapered shape in order to have a limited fluid-dynamic resistance to the advancement of the liquid that flows around it.

Nevertheless, further shapes of the body 4 are possible, without departing from the protective scope of the present invention.

The at least one hydraulic turbine 3 is connected to the floating platform 2 by means of connection means 6, in a manner such that, during use, the at least one hydraulic turbine 3 is extended below the floating platform 2.

With reference to the enclosed figures, the system for producing electric energy 1 according to the present invention has eight hydraulic turbines 3 associate below the floating platform 2.

Further versions of a system for producing electric energy 1 according to the present invention are possible, comprising a higher or lower number of hydraulic turbines 3; such versions nevertheless fall within the same inventive concept according to the present invention.

The system for producing electric energy 1 according to the present invention comprises actuation means, indicated overall with 7, for moving the at least one turbine 3 with respect to the floating platform 2.

More in detail, the actuation means 7, as better described hereinbelow, are operatively connected to the connection means 6 for the purpose of moving the at least one hydraulic turbine 3 close to or away from the floating platform 2.

Such movement of the at least one hydraulic turbine 3 attains a double effect, since on one hand it allows positioning the at least one turbine 3 at a specific depth as a function of the use requirements, and on the other hand it facilitates the performance of the maintenance thereof, the at least one turbine 3 in fact being able to be moved close to the floating platform 2, if desired partially or completely extracting it from the water.

In particular, if the floating platform 2 is raised with respect to the floating surface G by a height H, greater than the size of the at least one turbine 3, the same can be easily extracted from the water, being positionable between the floating platform 2 and the floating surface (see by way of example figure 3).

According to one version of the present invention, the connection means 6 are shaped as elongated elements.

More in detail the connection means 6 can comprise at least one post 8 or a reticulated structure or the like.

The connection means 6 have a longitudinal axis 9 along which they are extended.

The at least one turbine 3 can be associated with one end of the connection means 6.

The length of the at least one post 8 or of the reticulated structure or the like is selected according to specific use requirements, and in a manner such to allow the positioning of the at least one hydraulic turbine 3 at a preestablished depth with respect to the floating surface G, in proximity to which there are the maximum currents.

Typically, the maximum underwater currents, i.e. those currents which have a high intensity and flow rate, are not particularly deep. Today, it is estimated that the greatest underwater currents are already present at about 30 meters depth.

The at least one post 8 can then have a length suitable for positioning the at least one hydraulic turbine 3 associated therewith at the desired depth, without any limitation.

The longitudinal axis 9 of each of the connection means 6 is positioned in a manner so as to be extended, during use, substantially along a vertical direction.

As stated, the system for producing electric energy 1 comprises actuation means 7 operatively associated with the connection means 6 in order to move the latter close to or away from the floating platform 2.

More in detail, the actuation means 7 are configured for actuating the at least one hydraulic turbine 3 associated with the connection means 6, moving it along a direction parallel to the longitudinal axis 9.

According to one version of the present invention, the actuation means 7 can comprise a mechanism of rack-pinion type or the like associated with the connection means 6.

By way of example, if the connection means comprise at least one post 8, the actuation means 7 can have a rack, which is extended substantially over the entire length of the at least one post 8 itself, engageable by a pinion associated with the floating platform 2. The rotation actuation of the pinion causes the movement of the rack and consequently of the respective at least one post 8 along the longitudinal axis 9, thus allowing the approach or movement away of a respective hydraulic turbine 3 with respect to the floating platform 2.

The mobility of the at least one hydraulic turbine 3 along a respective longitudinal axis 9 allows varying and adjusting the depth at which the at least one hydraulic turbine 3 is positionable, so to be able to intercept the greater underwater current.

In addition, the possibility to move the at least one hydraulic turbine 3 close to the floating platform 2 is of particular interest for facilitating the performance of the maintenance of the at least one hydraulic turbine 3 itself, in fact rendering it easily accessible when placed in proximity to the floating platform 2, if desired in a position extracted from the water.

According to one version of the present invention, the system for producing electric energy 1 comprises at least one rotatable joint 10 operatively associated with the at least one hydraulic turbine 3 so to be able to vary the orientation thereof with respect to the floating platform 2, in a horizontal plane.

The rotatable joint 10 can be configured for ensuring the rotation of the at least one hydraulic turbine 3 associated with the connection means 6 at least around the longitudinal axis 9.

In such a manner, it is possible to orient the at least one hydraulic turbine 3 so to be able to align the rotary member 5 thereof with the marine current and optimize the exploitation of the latter. Such characteristic is of particular interest if the rotary member 5 is a propeller 5' or a bladed body 5" rotatable around a horizontal rotation axis.

According to one version of the present invention, the joint 10 can be provided at the at least one floating platform 2 and be connected to the connection means 6, in order to allow the rotation of the at least one hydraulic turbine 3 around a respective longitudinal axis 9.

According to a further version of the present invention, the joint 10 can be comprised in the at least one hydraulic turbine 3 and, hence, be operatively connected to the connection means 6, in order to allow the rotation of the at least one hydraulic turbine 3 around a respective longitudinal axis 9.

According to a further aspect of the present invention, the system for producing electric energy 1 can comprise further connection means 11 operatively associated with each of the connection means 6 in a manner such to allow the rotation of the at least one hydraulic turbine 3 around a substantially horizontal transverse axis 12.

The transverse axis 12 is aligned perpendicular or substantially perpendicular to the longitudinal axis 9.

The further connection means 11 comprise at least one further joint 13 and respective movement means 14 operatively associated with each of the connection means 6.

The at least one further joint 13 is of the type configured for allowing the rotation of the connection means 6 associated therewith around the transverse axis 12 (see figure 4).

Due to the movement means 14 and the further connection means 11, the at least one hydraulic turbine 3 can be rotated around the transverse axis 12, with an oscillating motion with respect to the floating platform 2, for the purpose of allowing the approaching of the at least one hydraulic turbine 3 itself to the floating surface or, if desired, even being able to raise it above the floating surface G until it is brought in proximity to the floating platform 2.

The at least one hydraulic turbine 3, therefore, following its extraction from the water, is easily accessed, facilitating the maintenance thereof.

The movement means 14 allow moving the at least one hydraulic turbine 3 between an operative position, in which the connection means 6 are vertically oriented and the at least one hydraulic turbine 3 is completely immersed in the water, and a non-operative position, in which the at least one hydraulic turbine 3 is placed in proximity to the floating surface G or extracted from the water.

By way of example, the further movement means 14 can be actuated after or simultaneously with the actuation means 7 in order to facilitate the step of approaching and/or of extracting the at least one hydraulic turbine 3 from the water.

The system for producing electric energy 1 also comprises means for controlling and managing the actuation means 7 and/or the movement means 14, not illustrated in the enclosed figures, in order to simultaneously or separately manage the positioning of each of the hydraulic turbines 3 connected to the floating platform 2.

According to one version of the present invention, the floating platform 2 can have a central opening or open central portion 15 in order to facilitate the access to the at least one hydraulic turbine 3 (see figure 4).

In particular, the at least one hydraulic turbine 3 can be moved through the central opening 15 or in proximity thereto, in order to be easily accessible to the personnel present on the floating platform 2, thus facilitating the maintenance thereof.

By way of example, if it is necessary to move the at least one hydraulic turbine 3 close to the floating platform 2, in proximity to the central opening 15, it is possible to move the further connection means 11, causing the rotation of the connection means 6 and of the at least one hydraulic turbine 3 associated therewith around the transverse axis 12, in fact actuating the at least one hydraulic turbine 3 in an oscillating manner with respect to the floating platform 2, until it is brought in proximity to the central opening 15.

With reference to the enclosed figures, the floating platform 2 has an upper surface 16 provided with an octagonal plan extension. It is intended that the upper surface 16 can be configured in a different manner and have, for example, a square, rectangular, circular plan or plan of any other shape without any limit.

In addition, in the enclosed figures, the connection means 6, and more precisely the at least one post 8, are depicted associated with the perimeter edge portion of the floating platform 2, although it is intended that further positions are possible, for example in proximity to the center of the floating platform 2 itself, without any limitation.

According to a further aspect of the present invention, the floating platform 2 can have further generators, not illustrated in the enclosed figures, adapted to produce current by means of the exploitation of further energy carriers, of renewable type.

For example, such further generators can comprise at least one wind generator and/or one photovoltaic panel, placed above the floating platform 2.

According to such version, therefore, the system for producing electric energy 1 allows exploiting not only the motion of underwater currents but also wind energy and/or solar energy.

The system for producing electric energy 1 can comprise means for the temporary storage of electric energy produced by the at least one hydraulic turbine 3 and/or by the at least one further generator, such as batteries or the like adapted for such purpose, schematically indicated with 17, which are suitably wired to each hydraulic turbine 3.

The system for producing electric energy 1 according to the present invention can comprise wiring means, not indicated in the enclosed figures, in order to allow the transfer of the produced electric energy to a remote plant for the subsequent introduction into a power distribution grid.

According to one version of the present invention, the system for producing electric energy 1 can comprise measuring means 18 adapted to detect the flow rate and the direction of underwater currents in proximity to the floating platform 2.

On the basis of the data collected by the aforesaid measuring means 18, it is possible to orient the at least one hydraulic turbine 3, lifting it/lowering it and/or rotating it around its longitudinal axis 9, for the purpose of optimally aligning it in the direction of the underwater current.

According to a further aspect of the present invention, the system for producing electric energy 1 can comprise a helipad and/or a sea dock, not illustrated in the enclosed figures, operatively connected to the floating platform 2, respectively intended to allow the landing of a helicopter on the floating platform 2 or the mooring of a boat at the floating platform 2 itself, facilitating the access thereto. For such purpose, it is considered that a system for producing electric energy 1 according to the present invention can be installed at open sea and hence situated at a position that is remote from land.

With reference to that set forth above, it is clear that the system for producing electric energy 1 according to the present invention attains the preset objects.

The possibility to move each hydraulic turbine 3 with respect to the floating platform 2 allows optimizing the exploitation of the hydraulic energy possessed by underwater currents, allowing the positioning of the at least one hydraulic turbine 3 at the underwater current even in the presence of variations of the latter.

In addition, the possibility to move the at least one hydraulic turbine 3 close to the floating platform 2, or even be able to completely extract it from the water, simplifies the performance of the maintenance operations, considerably reducing the operating costs thereof.

Since the maintenance of the at least one hydraulic turbine 3 is facilitated, in the system for producing electric energy 1 according to the present invention the use of hydraulic turbines with limited maintenance is not required; as described above, these have considerably higher production costs than those of a hydraulic turbine 3 of conventional type.

Therefore, it is possible to further reduce the manufacturing costs of a system for producing electric energy 1 according to the present invention, facilitating the implementation of one such solution.

The invention thus conceived is susceptible of numerous modifications and variations, all falling within the scope of the inventive concept.

In addition, all details can be substituted with other technically equivalent elements. In practice, the materials used, as well as the contingent shapes and sizes, can be of any type in accordance with requirements, without departing from the protective scope of the following claims.

## Claims

1. System for producing electric energy through the exploitation of underwater currents comprising:
at least one floating platform (2)
at least one hydraulic turbine (3) able to produce electrical current when hit by an underwater current;
connection means (6) of said at least one hydraulic turbine (3) to said at least one floating platform (2), wherein said connection means (6) define the positioning of said at least one hydraulic turbine (3) in a position below said floating platform (2),
**characterised in that** it comprises actuation means (7) operatively connected to said connection means (6) and configured to allow the approach or movement away of said at least one hydraulic turbine (3) with respect to said floating platform (2).

2. System for producing electric energy according to claim 1, wherein said connection means (6) comprise at least one elongated element having a longitudinal axis (9) along which the elongated element extends.

3. System for producing electric energy according to claim 1 or 2, wherein said connection means (6) comprise at least one post (8) or a reticulated structure or an elongated structure extending along said longitudinal axis (9).

4. System for producing electric energy according to claim 2, wherein said longitudinal axis (9), in use, is substantially vertically aligned.

5. System for producing electric energy according to any previous claim, wherein said connection means (6) are placed at the perimetrical edge of said floating platform (2).

6. System for producing electric energy according to any previous claim, wherein said actuation means (7) are of the rack-pinion type.

7. System for producing electric energy according to any previous claim, comprising at least one rotatable joint (10) for the rotating connection of said at least one hydraulic turbine (3) to said floating platform (2) around a respective longitudinal axis (9).

8. System for producing electric energy according to any previous claim, comprising further means (11) for the connection of respective among said connection means (6) to said floating platform (2), wherein said further means (11) for the connection comprise a further joint (13) configured to allow the rotation of a respective among said connection means (6) around an axis (12) transversal with respect to said longitudinal axis (9).

9. System for producing electric energy according to the previous claim, wherein said transversal axis (12) is perpendicular with respect to said longitudinal axis (9).

10. System for producing electric energy according to claim 8 o 9, wherein said further means (11) comprise movement means (14) operatively associated with each of said connection means (6), for moving said at least one hydraulic turbine (3) in rotation around to said transversal axis (12), with an oscillating motion with respect to said floating platform (2).

11. System for producing electric energy according to any previous claim, comprising means (16) for the temporary storage of electric energy produced by said at least one hydraulic turbine (3), operatively wired to said at least one hydraulic turbine (3).

12. System for producing electric energy according to claim 1, wherein said floating platform (2) has at least one through central opening (15), through which said at least one hydraulic turbine (3) can be moved.

13. System for producing electric energy according to any of the previous claims, comprising means (17) for detecting the flow rate and/or the direction of a underwater current near said floating platform (2).

14. System for producing electric energy according to any previous claim, comprising at least one further wind and/or photovoltaic generator, placed above to said floating platform (2).
